# EUROPEAN PATENT SPECIFICATION

(11) **EP 2 249 685 B1**
(45) Date of publication and mention of the grant of the patent: **15.05.2013**
(21) Application number: 09706999.1
(22) Date of filing: 29.01.2009
(51) Int. Cl.: F16B 43/00, G09F 7/18

(54) **FIXING**
VERBESSERTER SPIRALKOPPLER
FIXATION

(30) Priority: 30.01.2008 GB 0801668
(43) Date of publication of application: 17.11.2010
(73) Proprietor: Phillips, Gareth, Braintree Essex CM7 3RJ (GB)
(72) Inventor: Phillips, Gareth, Braintree Essex CM7 3RJ (GB)
(74) Representative: Sanderson & Co.
(86) International application number: PCT/GB2009/000252
(87) International publication number: WO 2009/095673

(56) References cited:
- US-A- 4 842 912
- US-A1- 2007 141 289

## Description

The present invention relates to a fixing to be bonded to an item to mount that item on a support structure. The present invention is particularly well suited for use in mounting a sign to a supporting surface such as a wall, but although it will predominantly be described with reference to that use it is by no means limited to such use and may be used to interconnect components of a structure.

Many different types of fixings are available for mounting an item to a supporting surface, and these differ considerably depending on their quality, the characteristics of the item, the characteristics or environment of the supporting surface and the means by which they are secured to the item and the supporting surface. Some fixings, particularly those used for mounting an ornamental item (such as a sign or glass construction) to a supporting surface are required to have an attractive appearance. Indeed, in many cases the fixing would be located behind the ornamental item and so it would not usually be visible but in some arrangements the fixings would be visible, particularly if the item is made of glass or another transparent material.

Furthermore, some items include no fastening formations to aid fastening (either for structural or aesthetic reasons), such as holes or bolts, to which the fixing can be connected and so it is necessary to bond the fixing to the item using a suitable adhesive. One particular fixing used for fixing a sign to a wall includes a female part to be fastened on a wall and a male part to be bonded to the sign, the male part can then be inserted into the female part and a grub screw is provided to hold the parts together. A main problem with this kind of fixing is that the bond between the item and the male part deteriorates over time, particularly when mounted outdoors where it is exposed to the elements. Attempts have been made to improve adhesive attachment, such as in US4842912 and US2007/0141289, but these concentrated on holding bonding interfaces as they formed and have not solved related problems with degradation over time.

US 4842 912 discloses a fixing for an item according to the preamble of claim 1.

An object of the present invention is to provide a fixing that may be bonded to an item to be mounted either indoors or outdoors and which fixing includes means by which the adhesive bond is protected. A further object of the present invention is to provide such a fixing which has an attractive appearance.

According to the invention there is provided a fixing for an item according to claim 1.

The first attachment may be used to attach the item to another, whether directly or indirectly. The item may be mounted on something else or something may be mounted on the item. The first attachment may be part of an object to be connected to the item.

The sealed chamber around the bonding interface prevents the external environmental conditions adversely affecting the bond. Such external environmental conditions may include weather, moisture and pollutants present in the air/water.

Advantageously, a second seal is provided on one of the first attachment and the cover sealingly to engage the other of the first attachment and cover. The advantage of this second seal is that it can reduce the size of the sealed chamber and improve the integrity thereof. When a chamber is sealed it contains air with contaminants, so the smaller the sealed chamber the less air and contaminants are in contact with the adhesive.

Preferably the cover has an end face which bears on the surface, and the first seal is provided on that face. Preferably the cover also has an internal surface that overlies a rear part of the first attachment, and the second seal is provided between that internal surface and rear part. The second seal may be defined by the faces themselves if suitably formed, but preferably the seals comprise O-rings or equivalent sealing devices which adapt to conform to the surfaces against which they bear and may be compressed to improve sealing. The cover, or that part which defines the front face, may also be formed from a resilient material such that it may help in forming the seal to the surface. Nevertheless, O-rings are particularly advantageous because they provide the necessary continuous seal for creating the sealed chamber and they deform elastically under load to conform to any surface irregularities. Preferably, such seals are located in recesses provided on the end face and/or interior surface, the first and second seals being adapted to locate in these recesses to inhibit inadvertent displacement thereof. Only part of each such seal locates in its recess, the remainder projects beyond the surface in which its recess is formed and in use engages the first attachment or item.

Advantageously, a shank extends rearwardly from the first attachment for the connection to other objects. The shank may be integral to the first attachment or it may be provided with a threaded portion which engages a threaded recess provided on a rear face of the first attachment. When the first attachment has such a shank, the cover may require a hole to be formed therethrough. The hole in the cover may be threaded and arranged to engage a threaded portion of the shank, so that the cover may be screwed onto the shank, and first attachment by rotation of the cover relative to the first attachment until the seals engage the surface of the item and/or first attachment, respectively.

In an alternative arrangement the cover may include a shank and the cover may have a threaded portion adapted to engage a threaded portion provided on the first attachment.

Furthermore, there may also be provided a second attachment arranged to be secured to a support such as a wall or the like and connected to the first attachment or the cover. The second attachment may comprise a boss having a large bore formed at least partway therethrough and in which large bore the pin locates. A small bore may be formed in the second attachment and this may extend normal to and intersect the large bore, the small bore may be threaded and may be adapted to receive a grub screw which engages the shank when located in said large bore. The shank on the cover or first attachment may be connected to the second attachment by a variety of means including the provision of cooperating screw threads as well as the use of push fitting.

In a preferred arrangement the front face of the first attachment corresponds to the surface of the item to which it is to be bonded and most preferably both faces are substantially planar. Similarly the end face of the cover, which like the surface may not be planar, corresponds to the surface of the item against which it bears. Furthermore, the internal face of the cover preferably corresponds to the rear parts of the first attachment.

With the exception of the seal or seals the fixing of the present invention may be constructed from solid materials, such as metal or plastics. The front face of the first attachment may be provided with means to improve the bonding. The term bonding as used herein encompasses the attachment of one surface to another by any appropriate means. It includes the use of adhesives or treatments (chemical, thermal, sonic or mechanical) to activate the respective surfaces to allow them to join. The present invention provides a desirable appearance to a finished item so may be used when a bonding interface is not subject to degradation if not sealed. However it is primarily intended for use where the interface is potentially subject to such degradation.

By way of example only, one specific embodiment of the invention will now be described in detail, with reference to the accompanying drawings in which:
**Figure 1** is a perspective view of a sign mounted to a wall by two fixings of the present invention;
**Figure 2** is an enlarged view of one of the fixings shown in Figure 1;
**Figure 3** is a perspective view of a first part of the fixing shown in Figure 2, which is to be bonded to an item;
**Figure 4** is a cross-sectional view through the first part shown in Figure 3;
**Figure 5** is a perspective view of a cover forming part of the fixing shown in Figure 2;
**Figure 6** is a cross-sectional view through the cover shown in Figure 5;
**Figure 7** is a perspective view of a second part of the fixing shown in Figure 2, which is to be fastened to a supporting wall;
**Figure 8** is a cross-sectional view through the second part shown in Figure 7; and
**Figure 9** is a cross-section through the assembled fixing while connecting an item to a supporting wall.

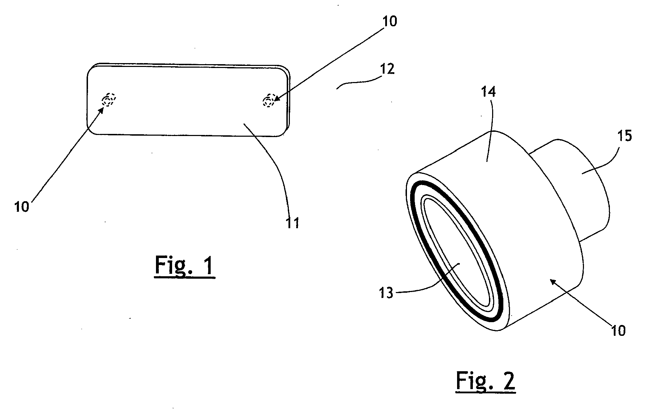

Referring to Figures 1 and 2 there is shown a fixing generally indicated 10 for mounting a sign 11 on a wall 12. The fixing comprises a first attachment 13 which is bonded to the sign 11, a cover 14 which overlies the first attachment 13 and a second attachment 15 which is fastened to the supporting wall 12 and which is to be connected to the first attachment 13.

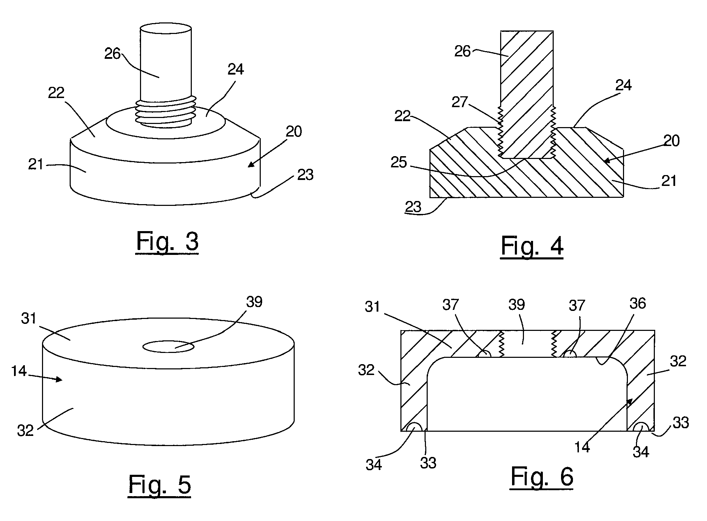

The first attachment 13 is shown in more detail in Figures 3 and 4, and includes a main body 20 having a cylindrical front portion 21 and a frusto-conical rear portion 22, the front portion 21 defining a front face 23 and the frusto-conical portion 22 defining a smaller rear face 24. A threaded bore 25 is provided in the centre of the rear face 24 and a shank in the form of a pin 26 having a threaded end portion 27 is screwed into the bore, the length of the threaded portion being longer than the depth of the bore 25 so that several turns of the thread remain visible.

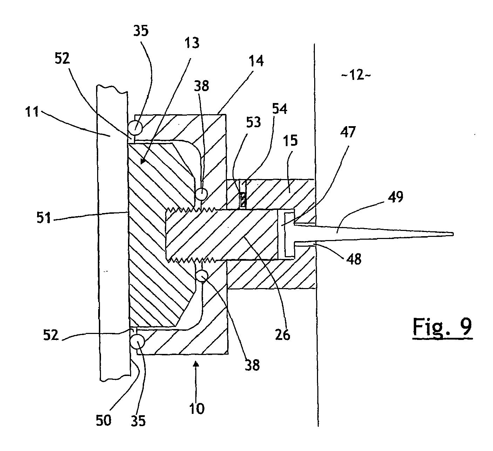

Referring now to Figures 5 and 6 there is shown the cover 14 having a circular base 31 and an annular wall 32 extending from the periphery of the base. The annular wall 32 has an end face 33 remote from the base 31 in which there is provided a first groove 34 adapted to receive an O-ring 35 (see Fig. 9). The internal surface 36 of the base also is provided with a second groove 37 adapted to receive a second O-ring 38 (see Fig. 9). A threaded bore 39 is formed through the centre of the base 31 and arranged to engage the threaded portion 27 of the shank 26.

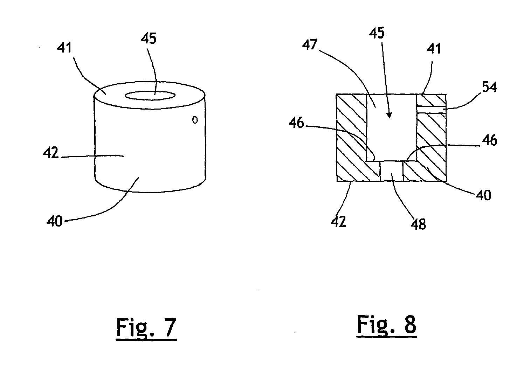

The second attachment is shown in Figures 7 and 8 and comprises a cylindrical boss 40 having opposed front and rear circular faces 41, 42, the front face of the boss being adapted to abut the rear face of the cover and the rear face of the boss being adapted to lie against the wall 12 to which the sign 11 is to be mounted. A bore 45 is formed in the boss and extends along the central axis of the boss through the centre of the front and rear faces 41, 42. The bore 45 narrows partway along its length to define a shoulder 46 delineating a diametrically larger portion 47 near the front face 41 and a diametrically smaller portion 48 near the rear face 42. The boss 40 is secured to the wall 12 by a screw (numbered 49 in Figure 9) having a shank which extends through the diametrically smaller portion and into the wall and a head which bears against the shoulder 46. A small threaded bore 54 is formed through the circumferential wall of the boss and extends normal to and intersects the diametrically larger portion 47 of the bore 45. A grub screw 53 threadingly engages the small bore and can be tightened to project into the diametrically small portion 47.

In use, the front face 23 of the first attachment 13 is bonded to a rear face 50 of the sign 11 by a suitable adhesive to form a bonding interface 51. The cover 14 is then fitted to the first attachment 13 by screwing the threaded bore 39 of the cover onto the shank 26 until the first O-ring 35 sealingly engages the rear face 50 of the sign 11 and the second O-ring 38 sealingly engages the rear face 24 of the first attachment 13. In this way a sealed chamber 52 is created which prevents the bonding interface 51 from being exposed to the environment. When the cover 14 is fully screwed onto the first attachment 13 the threaded portion 27 does not extend beyond the rear face of the cover 14.

The second attachment 15 is mounted on to the wall 12 by a screw as described above. The sign 11 is then presented near the wall 12 and the shank 26 inserted into the diametrically larger portion 47 of the boss 40 and the grub screw 53 is tightened so as to engage the shank 26 and secure it in position.

In most cases at least two fixings 10 would be required securely to mount a sign 11 to a wall 12 and some heavy, larger signs would require more fixings. In which case the same installation procedure as described above should be adapted but care would be required to ensure the spacing between the first attachments 13 bonded to the sign 11 correspond to the spacing between the second attachments 15 fastened to the wall 12.

The present invention provides a mechanism for bonding onto surfaces, which gives high strength and resistance to degradation. This can be used to mount one item on another or even to fix multiple items together, one or more being bonded to fixings according to the present invention. This can allow for the construction of complicated structures, especially of glass with fixings that do not require the cutting of holes, but which are visually appealing.

## Claims

1. A fixing (10) for an item (11) comprises:
- a first attachment (13) having a front face (23) adapted to be bonded to a surface of the item to define a bonding interface (51);
- a cover (14) arranged to overlie at least part of the first attachment (13) and having a first seal (35) arranged sealingly to engage the surface of the item (10) around the first attachment (13) to define a sealed chamber (52) around edges of the bonding interface(51) **characterised in that** the first seal (35) is an elastically deformable O-ring.

2. A fixing as claimed in claim 1, wherein one or more second seal (38) is provided on one of the first attachment (13) and the cover (14) sealingly to engage the other of the first attachment (13) and cover (14).

3. A fixing as claimed in claim 1 or claim 2, wherein the cover (14) has an end face (33) on which the first seal (35) is provided.

4. A fixing as claimed in claim 3, wherein the cover (14) also has an internal surface (36) that overlies a rear face (24) of the first attachment (13), and when a second seal (38) is present it is provided between that internal surface (36) and rear face (24).

5. A fixing as claimed in claim 3 or claim 4, and further comprising a first groove (34) provided on the end face (33), in which groove the first seal (35) locates.

6. A fixing as claimed in any of claims 4 or 5 and further comprising a second groove (37) provided on the interior surface (36), in which groove a second seal (38) locates.

7. A fixing as claimed in any of the preceding claims, wherein a shank (26) extends rearwardly from the first attachment (13) or cover (14).

8. A fixing as claimed in claim 7 wherein the shank (26) is formed on the first attachment and in use extends through a hole (39) formed in the cover (14).

9. A fixing as claimed in claim 8, wherein the shank (26) is integral to the first attachment (13).

10. A fixing as claimed in claim 8 wherein the shank (26) threadingly engages a recess provided on the rear face (24) of the first attachment (13).

11. A fixing as claimed in any of claims 8 to 10, wherein the hole (39) in the cover (14) is threaded and arranged to engage a threaded portion provided on the shank (26).

12. A fixing as claimed in any of the preceding claims, and further comprising a second attachment (15) to be secured to a support and connected to the first attachment (13) either directly or by means of the cover.

13. A fixing as claimed in claim 12 when dependent on any of claims 7 to 11, wherein the second attachment (15) comprises a boss (40) having a bore (45) formed 11, wherein the second attachment (15) comprises a boss (40) having a bore formed at least partway therethrough and in which bore (45) the shank locates.

14. A fixing as claimed in claim 3 or any of claims 4 to 13 when dependent thereon, wherein the end face (33) matches the surface of the item (11) around the bonding interface against which it bears.

15. A fixing as claimed in claim 4 or any of claims 5 to 14 when dependent thereon, wherein the internal surface of the cover (14) corresponds to the rear part of the first attachment (13).

## Patentansprüche

1. Befestigungseinrichtung (10) für einen Gegenstand (11) mit:
- einem ersten Ansatz (13), der eine Vorderfläche (23) hat, die dazu ausgestaltet ist, an einer Oberfläche des Gegenstandes zu haften, um eine Haftkontaktfläche (51) zu definieren,
- einem Deckel (14), der dazu ausgestaltet ist, um wenigstens über einem Teil des ersten Ansatzes (13) zu liegen, und der eine erste Dichtung (35) hat, die dazu ausgestaltet ist, dicht an der Oberfläche des Gegenstandes (10) um den ersten Ansatz (13) herum anzuliegen, um eine abgedichtete Kammer (52) um die Ränder der Haftkontaktfläche (51) zu bilden, **dadurch gekennzeichnet, dass** die erste Dichtung (35) ein elastisch verformbarer O-Ring ist.

2. Befestigungseinrichtung wie in Anspruch 1 beansprucht, wobei eine oder mehrere zweite Dichtungen (38) an dem ersten Ansatz (13) und an dem Deckel (14) vorgesehen sind, um dichtend an dem anderen von dem ersten Ansatz (13) und dem Deckel (14) anzuliegen.

3. Befestigungseinrichtung wie in Anspruch 1 oder Anspruch 2 beansprucht, wobei der Deckel (14) eine Endfläche (33) hat, auf der die erste Dichtung (35) vorgesehen ist.

4. Befestigungseinrichtung wie in Anspruch 3 beansprucht, wobei der Deckel (14) eine Innenfläche (36) hat, die über einer Rückfläche (24) des ersten Ansatzes (13) liegt, und, wenn eine zweite Dichtung (38) vorhanden ist, diese zwischen dieser Innenfläche (36) und der Rückfläche (24) vorgesehen ist.

5. Befestigungseinrichtung wie in Anspruch 3 oder Anspruch 4 beansprucht, die weiter eine erste Nut (34) aufweist, die in der Endfläche (33) vorgesehen ist, wobei die erste Dichtung (35) in der Nut (34) angeordnet ist.

6. Befestigungseinrichtung wie in einem der Ansprüche 4 oder 5 beansprucht, die weiter eine zweite Nut (37) aufweist, die an der Innenfläche (36) vorgesehen ist, wobei die zweite Dichtung (38) in der Nut (37) angeordnet ist.

7. Befestigungseinrichtung wie in einem der vorhergehenden Ansprüche beansprucht, wobei ein Zapfen (26) sich von dem ersten Ansatz (13) oder dem Deckel (14) nach hinten erstreckt.

8. Befestigungseinrichtung wie in Anspruch 7 beansprucht, wobei der Zapfen (26) an dem ersten Ansatz (13) gebildet ist und sich im Betrieb durch ein in dem Deckel (14) gebildetes Loch (39) erstreckt.

9. Befestigungseinrichtung wie in Anspruch 8 beansprucht, wobei der Zapfen (26) einstückig mit dem Ansatz (13) ausgebildet ist.

10. Befestigungseinrichtung wie in Anspruch 8 beansprucht, wobei der Zapfen (26) in einer an der Rückfläche (24) des ersten Ansatzes (13) vorgesehenen Vertiefung in Gewindeeingriff steht.

11. Befestigungseinrichtung wie in einem der Ansprüche 8 bis 10 beansprucht, wobei das Loch (39) in dem Deckel (14) mit einem Gewinde versehen ist und dazu ausgestaltet ist, in Eingriff mit einem Gewindebereich zu treten, der an dem Zapfen (26) vorgesehen ist.

12. Befestigungseinrichtung wie in einem der vorhergehenden Ansprüche beansprucht, die weiter einen zweiten Ansatz (15) aufweist, der an einem Träger zu befestigen ist und mit dem ersten Ansatz (13) entweder direkt oder mittels des Deckels verbunden ist.

13. Befestigungseinrichtung wie in Anspruch 12 beansprucht, wenn abhängig von einem der Ansprüche 7 bis 11, wobei der zweite Ansatz (15) einen Aufsatz (40) aufweist, der eine wenigstens teilweise hindurch verlaufende Bohrung (45) aufweist, und wobei die Bohrung (45) den Zapfen (26) positioniert.

14. Befestigungseinrichtung wie in Anspruch 3 oder wie in einem der Ansprüche 4 bis 13, wenn abhängig davon, beansprucht, wobei die Endfläche (33) zu der Oberfläche des Gegenstandes (11) um die Haftkontaktfläche (51) herum, an der sie anliegt, passt.

15. Befestigungseinrichtung wie in Anspruch 4 oder einem der Ansprüche 5 bis 14, wenn abhängig davon, beansprucht, wobei die Innenfläche des Deckels (14) dem hinteren Teil des ersten Ansatzes (13) entspricht.

## Revendications

1. Une fixation (10) pour un article (11) comprenant :
- une première attache (13) ayant une face avant (23) adaptée pour être liée à une surface de l'article pour définir une interface de liaison (51) ;
- un couvercle (14) agencé pour recouvrir au moins une partie de la première attache (13) et ayant un premier joint (35) agencé pour coopérer de façon étanche avec la surface de l'article (10) autour de la première attache (13) afin de définir une chambre scellée autour des bords de l'interface de liaison (51), **caractérisée en ce que** le premier joint (35) est une bague annulaire élastiquement déformable.

2. Une fixation selon la revendication 1, dans laquelle un joint (38) ou plusieurs, est prévu à un endroit de la première attache (13) et du couvercle (14) pour coopérer de façon étanche avec un autre endroit de la première attache (13) et du couvercle (14).

3. Une fixation selon l'une quelconque des revendications 1 ou 2, dans laquelle le couvercle (14) a une rebord (33) sur lequel le premier joint (35) est prévu.

4. Une fixation selon la revendication 3, dans laquelle le couvercle (14) a une surface interne (36) qui recouvre une face arrière (24) de la première attache (13), et lorsqu'un deuxième joint (38) est présent, il est placé entre cette surface interne (36) et cette face arrière (24).

5. Une fixation selon la revendication 3 ou 4, comprenant également une première encoche (34) prévue sur le rebord (33), encoche (34) dans laquelle le premier joint (35) se situe.

6. Une fixation selon l'une quelconque des revendications 4 ou 5, comprenant également une deuxième encoche (37) prévue sur la surface interne (36), encoche (37) dans laquelle un deuxième joint (38) se situe.

7. Une fixation selon l'une quelconque des précédentes revendications, dans laquelle une tige (26) s'étend vers l'arrière depuis la première attache (13) ou le couvercle (14).

8. Une fixation selon la revendication 7, dans laquelle la tige (26) est modelée sur la première attache (13) et pendant l'usage s'étend à travers un orifice (39) pratiqué dans le couvercle (14).

9. Une fixation selon la revendication 8, dans laquelle la tige (26) fait partie intégrante de la première attache (13).

10. Une fixation selon la revendication 8, dans laquelle la tige (26) est fixée par vissage dans un renfoncement prévu sur la face arrière (24) de la première attache (18).

11. Une fixation selon l'une quelconque des revendications 8 à 10, dans laquelle l'orifice (39) du couvercle (14) est fileté et agencé pour s'engager dans une portion filetée prévue sur la tige (26).

12. Une fixation selon l'une quelconque des précédentes revendications, comprenant également une deuxième attache (15) destinée à être attachée à un support et liée à la première attache (13) soit directement, soit au moyen du couvercle.

13. Une fixation selon la revendication 12, dans le cas où celle-ci dépend des revendications 7 à 11, dans laquelle la deuxième attache (15) comprend un moyeu (40) ayant un alésage (45) formé sur au moins une partie de la longueur, et dans lequel alésage la tige (26) se situe.

14. Une fixation selon la revendication 3 ou l'une quelconque des revendications 4 à 13 y afférent, dans laquelle le rebord (33) épouse la surface de l'article (11) autour de l'interface de liaison (51) contre laquelle elle s'appuie.

15. Une fixation selon la revendication 4 ou l'une quelconque des revendications 5 à 14 y afférent, dans laquelle la surface interne du couvercle (14) correspond à la surface arrière de la première attache (13).
